# EUROPÄISCHE PATENTANMELDUNG

(11) **EP 3 483 818 A1**
(43) Veröffentlichungstag der Anmeldung: **15.05.2019**
(21) Anmeldenummer: 18200569.4
(22) Anmeldetag: 16.10.2018
(51) Int. Cl.: G06Q 30/00

(54) **VERFAHREN ZUR SCHADENKONTROLLE BEI KRAFTFAHRZEUGEN**

(30) Priorität: 10.11.2017 DE 102017220027
(71) Anmelder: Ford Global Technologies, LLC, Dearborn, MI 48126 (US)
(72) Erfinder: Stefan, Frederic, 52072 Aachen (DE)
(74) Vertreter: Dörfler, Thomas

(57) **Zusammenfassung**

Die Erfindung betrifft ein Verfahren zur Schadenkontrolle bei einem Kraftfahrzeug (1), wobei mittels eines mobilen intelligenten Geräts (3), das eine Kamera (4) enthält, Bilder des Kraftfahrzeugs aufgenommen werden, aus denen eine aktuelle dreidimensionale Form des Kraftfahrzeugs gewonnen wird, die dann mit einer gespeicherten Referenzform des Kraftfahrzeugs verglichen wird, um Schäden am Kraftfahrzeug zu erkennen. Gemäß der Erfindung ist das Kraftfahrzeug (1) ein von einem Benutzer (2) zeitweise gemietetes Kraftfahrzeug, und auf dem mobilen Gerät (3) ist eine Anwendungssoftware (5) installiert, welche den Benutzer anleitet, wie er um das Kraftfahrzeug herumzugehen hat und aus bestimmten Positionen mit dem mobilen Gerät Bilder aufzunehmen hat, die das Kraftfahrzeug von allen Seiten zeigen.

## Beschreibung

Die Erfindung betrifft ein Verfahren zur Schadenkontrolle bei einem Kraftfahrzeug, wobei mittels eines mobilen intelligenten Geräts, das eine Kamera enthält, Bilder des Kraftfahrzeugs aufgenommen werden, aus denen eine aktuelle dreidimensionale Form des Kraftfahrzeugs gewonnen wird, die dann mit einer gespeicherten Referenzform des Kraftfahrzeugs verglichen wird, um Schäden am Kraftfahrzeug zu erkennen.

Besonders in Städten nutzen immer mehr Leute Carsharing-Angebote, um für kürzere Strecken und/oder Zeiten ein Kraftfahrzeug zur Verfügung zu haben. Ein Carsharing-Fahrzeug lässt sich schnell und einfach mittels eines Computers oder eines mobilen Geräts wie z. B. eines Smartphones buchen. Typischerweise wird der Fahrzeugmieter zu einem passenden Fahrzeug an einem gewünschten oder dem nächstliegenden Ort geleitet.

Vor Antritt der Fahrt sollte der Mieter den Zustand des Fahrzeugs auf Schäden prüfen, insbesondere die beim Herumgehen um das Fahrzeug sichtbare Fahrzeugoberfläche und den Fahrzeuginnenraum, und er sollte mögliche Schäden mit im Logbuch des Fahrzeugs aufgezeichneten Schäden vergleichen und ggf. dem Kundendienst des Carsharing-Anbieters mitteilen. Um dies zu erleichtern, sind im Logbuch aufgezeichnete äußere Beschädigungen manchmal mit Aufklebern markiert, welche allerdings das äußere Erscheinungsbild des Fahrzeugs beeinträchtigen. In jedem Fall ist die Schadenskontrolle für den Mieter zeitaufwändig und nicht immer zuverlässig. Häufig werden nicht aufgezeichnete Schäden übersehen, was den Beteiligten früher oder später Unannehmlichkeiten bereiten kann.

Die DE 10 2006 048 578 B4 offenbart ein Verfahren mit den Merkmalen des Oberbegriffs von Patentanspruch 1 und schlägt vor, mit einem Mobiltelefon Bilder eines Fahrzeugs aufzunehmen und an eine zentrale Stelle zu senden, wo sie mit einem dreidimensionalen Modell des Fahrzeugtyps verglichen werden, um Schäden am Fahrzeug zu erfassen und zu bewerten. Man muss die Fähigkeiten der Auswertesoftware allerdings gut kennen, um dafür geeignete Bilder aufnehmen zu können, und ein Laie wird in der Regel damit überfordert sein.

Der Erfindung liegt die Aufgabe zu Grunde, die Kontrolle und Erkennung von Beschädigungen an Carsharing-Fahrzeugen oder dergleichen, insbesondere von Kraftfahrzeug-Aufbauten wie z. B. Kratzern im Lack oder Schäden an Felgen, Rädern, Stoßfängern, Beleuchtungseinrichtungen usw., noch mehr zu erleichtern und zuverlässiger zu machen und insbesondere auch für Nutzer von Carsharing-Fahrzeugen durchführbar zu machen.

Diese Aufgabe wird gemäß der Erfindung durch ein Verfahren mit den Merkmalen von Patentanspruch 1 gelöst.

Vorteilhafte Weiterbildungen der Erfindung sind in den abhängigen Patentansprüchen angegeben.

Gemäß der Erfindung ist das Kraftfahrzeug ein von einem Benutzer zeitweise gemietetes Kraftfahrzeug, und auf dem mobilen Gerät ist eine Anwendungssoftware installiert, welche automatisch den Benutzer anleitet oder ihm assistiert, wie er um das Fahrzeug herumzugehen hat und aus bestimmten Positionen mit dem mobilen Gerät Bilder aufzunehmen hat, die das Kraftfahrzeug von allen Seiten zeigen, d. h., zumindest dessen Front-, Rück- und Seitenflächen.

Zur Durchführung des Verfahrens wird hardwareseitig lediglich ein mobiles intelligentes Gerät mit einer Kamera wie z. B. ein Smartphone oder ein Tabletcomputer benötigt, worüber Carsharing-Teilnehmer ohnehin verfügen. Darauf kann der Carsharing-Teilnehmer eine vom Carsharing-Anbieter zum Hochladen angebotene dedizierte Anwendungssoftware für mobile Geräte installieren, eine sog. App.

Vor Antritt jeder Fahrt, bei Beendigung einer Fahrzeugnutzung, wenn ein Aufprallsensor im Fahrzeug einen Unfall erkennt, oder wenn es der Fahrzeugmieter wünscht, weil er einen neuen Schaden vermutet, wird der Fahrzeugmieter von der App angeleitet, um das Fahrzeug herum zu gehen und in bestimmten Positionen stehen zu bleiben und mit dem mobilen Gerät bzw. dessen Kamera Bilder aufzunehmen, die das Fahrzeug aus allen Richtungen zeigen. Der Fahrzeugmieter kann auch angeleitet werden, wie er das mobile Gerät bzw. dessen Kamera dabei zu orientieren hat.

Aus diesen Bildern wird dann eine hochaufgelöste aktuelle dreidimensionale Form des Fahrzeugs erstellt. Die aktuelle dreidimensionale Form des Fahrzeugs wird dann mit einer gespeicherten Referenzform des Fahrzeugs verglichen, um Schäden zu erkennen, und erkannte Schäden werden dann mit aufgezeichneten Schäden des Fahrzeugs verglichen.

Insbesondere erkennt ein Bildverarbeitungsalgorithmus äußere Beschädigungen des Fahrzeugs und vergleicht diese mit Schäden, die bei früheren Schadensanalysen aufgezeichnet und auf einem Cloud-Server gespeichert worden sind.

Die aktuelle dreidimensionale Form des Fahrzeugs kann die von den verschiedenen Kamerapositionen aus sichtbare Fahrzeugoberfläche sein, doch kann auf ähnliche Weise zusätzlich auch der Fahrzeuginnenraum erfasst werden, um entweder dessen Unversehrtheit oder irgendwelche Schäden z. B. an den Sitzen zu dokumentieren bzw. zu bewerten.

Die Erstellung der dreidimensionalen Form des Fahrzeugs, deren Vergleich mit der Referenzform und die Schadenserkennung können entweder von der App selbst durchgeführt werden oder von einem Rechner des Carsharing-Anbieters, auf den die Bilder hochgeladen werden, oder durch Online-Zusammenarbeit der App mit einem Rechner des Carsharing-Anbieters.

Mit der Erfindung wird ein Verfahren bereitgestellt, das es ermöglicht, Schäden an einem Carsharing-Fahrzeug systematisch und weitgehend automatisch zu erkennen und ggf. automatisch zu dokumentieren. Das Verfahren kann insbesondere vor und nach jeder Fahrzeugnutzung durchgeführt werden, eignet sich aber auch für die Vor-Ort-Dokumentation von Schäden, wenn das Carsharing-Fahrzeug in einen Unfall verwickelt wird.

Das erfindungsgemäße Verfahren eignet sich besonders für Carsharing-Fahrzeuge, welche typischerweise für relativ kurze Strecken bzw. Zeiten angemietet werden, doch kann es auch für klassische Autovermietungen nützlich sein.

In einer bevorzugten Ausführungsform werden fünf oder mehr, vorzugsweise einander überlappende Bilder aus verschiedenen Positionen aufgenommen, um die Fahrzeugoberfläche nahtlos zu erfassen. Die fünf Bilder können z. B. von vorne, hinten, links, rechts und schräg oben aufgenommen werden, doch könnten sie z. B. auch im Wesentlichen horizontal aus fünf ungefähr gleich beabstandeten Winkelpositionen rund um das Fahrzeug aufgenommen werden, um eine besonders gute Rundum-Abdeckung zu erzielen.

Vorzugsweise wird im Rahmen des Verfahrens zunächst eine Schadenprüfprozedur durchgeführt, und im Falle der Erkennung eines Schadens wird auch eine Schadensmeldeprozedur durchgeführt. Bei jeder Erkennung eines Schadens kann die aktuelle dreidimensionale Form des Kraftfahrzeugs gespeichert werden, um eine Schadens-Historie aufzustellen, welche ebenfalls gespeichert werden kann.

Es folgt eine Beschreibung eines Ausführungsbeispiels anhand der Zeichnung. Deren einzige Figur zeigt einen Überblick über die Komponenten eines Systems zur Schadenkontrolle bei Carsharing-Fahrzeugen.

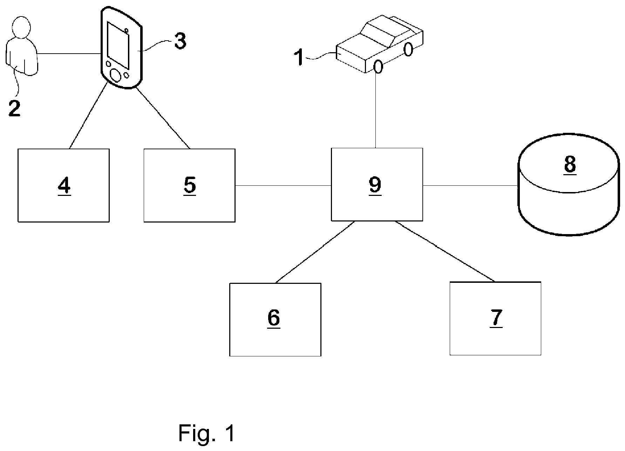

Wie in Fig. 1 gezeigt, beinhaltet ein Schadenkontrollsystem ein Carsharing-Fahrzeug 1, einen Benutzer 2 und Fahrer des Carsharing-Fahrzeugs 1, ein mobiles intelligentes Gerät wie z. B. ein Smartphone 3 des Benutzers 2, eine in dem Smartphone 3 eingebaute Kamera 4, und eine App 5, die in dem Smartphone 3 installiert ist und darauf läuft.

Die App 5 ist mit einem Steuerserver 9 verbunden und dafür eingerichtet, den Benutzer 2 durch eine Schadenkontrollprozedur zu leiten, welche zwei Betriebsarten A und B bietet.

Die Betriebsart A ist eine Schadenprüfprozedur, die zu Beginn jeder Fahrt mit dem Carsharing-Fahrzeug 1 gestartet wird, nachdem der Benutzer 2 das Fahrzeug 1 gebucht und übernommen hat, oder auch nach jeder Rückkehr des Benutzers 2, wenn er das Fahrzeug 1 während der Buchungsdauer geparkt und verlassen hat. Die Schadenprüfprozedur bzw. die App 5 führt insbesondere die folgenden Schritte durch:
- A.1.: Sie benachrichtigt den Benutzer 2, die Prüfung zu starten.
- A.2: Sie aktiviert die Kamera 4 des Smartphones 3.
- A.3.: Sie fordert den Benutzer 2 auf, nacheinander typischerweise vier Positionen rings um das Fahrzeug 1 einzunehmen und jeweils die Kamera 4 auf das Fahrzeug 1 zu richten. Die vier Positionen können vor, hinter, links neben und rechts neben dem Fahrzeug 1 sein.
- A.4.: Dabei erkennt die App 5 von sich aus, dass der Benutzer 2 jeweils die richtige Position erreicht hat, z. B. unter Verwendung von Sensoren des Fahrzeugs 1, Bildverarbeitung, Relativposition mittels Bluetooth, Smartphone-Fahrzeug-Kommunikation, Fahrzeugschlüsselortung usw.)
- A.5.: Jedes Mal, wenn der Benutzer 2 die entsprechende Position erreicht hat, informiert die App 5 den Benutzer 2 z. B. durch Vibrationen oder Klänge des Smartphones 3 darüber und fordert ihn nötigenfalls auf, die Position des Smartphones 3 zu korrigieren, so dass die Kamera 4 eine geeignete Ansicht des Fahrzeugs 1 bekommt.
- A.6.: Wenn die Positionen des Benutzers 2 und der Kamera 4 korrekt sind, nimmt die App 5 jedes Mal automatisch ein Bild auf.
- A.7.: Die Bilder werden an einen Bildverarbeitungsalgorithmus 6 für Schadensprüfung gesendet, welcher weiter unten erläutert wird.
- A.8.: Es könnte auch ein Bild des Fahrzeugdachs angefordert oder aus den vier vorhergehenden Bildern rekonstruiert werden.

Die Betriebsart B ist eine Schadensmeldeprozedur, die von dem Benutzer 2 gestartet wird und einen Schaden am Fahrzeug 1 direkt meldet, typischerweise dann, wenn das Fahrzeug 1 direkt in einen Unfall verwickelt war oder wenn der Benutzer 2 einen neuen Schaden sofort melden möchte. Zusätzlich kann bei geparkten Fahrzeug 1 überwacht werden, ob es irgendeinem Stoß ausgesetzt wird, und kann der Benutzer ggf. benachrichtigt werden, eine Schadensmeldeprozedur zu starten. Die Schadensmeldeprozedur bzw. die App 5 führt insbesondere die folgenden Schritte durch:
- B.1.: Der Benutzer 2 zeigt der App 5 an, welcher Bereich des Fahrzeugs betroffen ist.
- B.2.: Die App 5 führt die oben erläuterten Schritte A.3 bis A.5 für den betroffenen Bereich durch.
- B.3.: Die App 5 nimmt automatisch ein Bild der Szenerie auf.
- B.4.: Optional bittet die App 5 den Benutzer 2, den Ort des Schadens auf dem aufgenommenen Bild zu markieren, z. B. indem er das Bild an der entsprechenden Stelle berührt, und/oder sendet das Bild an den Bildverarbeitungsalgorithmus 6.

Der Bildverarbeitungsalgorithmus 6 kann ein Teil der App 5 auf dem Smartphone 3 sein oder kann auf einem Cloud-Server 8 implementiert sein. Der Bildverarbeitungsalgorithmus 6 nimmt die aufgenommenen Bilder des Fahrzeugs 1, rekonstruiert ein 3D-Bild des Fahrzeugs 1 und erstellt auf Basis dieses 3D-Bildes ein aktuelles Polygonnetz der Oberfläche des Fahrzeugs 1, das dessen dreidimensionale Oberflächenform repräsentiert. Das Polygonnetz sollte feinmaschig sein, um auch Kratzer erkennen zu können

Ein Schadensermittlungsalgorithmus 7 vergleicht das vom Bildverarbeitungsalgorithmus 6 verarbeitete aktuelle Polygonnetz mit einem Referenz-Polygonnetz. Das Referenz-Polygonnetz kann ein anfängliches Polygonnetz des Fahrzeugs 1 sein, wie es das Montageband verlassen hat, oder es kann das letzte Polygonnetz sein, das bei einer vorhergehenden Schadensermittlung aufgezeichnet worden ist. Das Referenz-Polygonnetz ist typischerweise auf dem Cloud-Server 8 gespeichert.

Der Schadensermittlungsalgorithmus 7 ermittelt Unterschiede zwischen dem aktuellen Polygonnetz und dem Referenz-Polygonnetz durch 3D-Form-Vergleich und analysiert dann den Ort der Unterschiede und vergleicht sie mit einer auf dem Cloud-Server 8 gespeicherten Liste von bekannten Schäden und deren Orten. Ein in den Historie-Daten des Fahrzeugs 1 nicht identifizierter Schaden wird dann als neuer Schaden identifiziert und auf dem Cloud-Server 8 gespeichert.

Der Benutzer 2 kann benachrichtigt und gebeten werden, den Schaden zu bestätigen. Außerdem kann Benutzer 2 gefragt werden, ob er in diesen Schaden verwickelt war, insbesondere wenn die Schadenprüfprozedur durchgeführt worden ist, nachdem der Benutzer 2 das Fahrzeug 1 während der Buchungsdauer geparkt und verlassen hat und nach einiger Zeit zum Fahrzeug zurückgekehrt ist.

Der Cloud-Server 8 ist ein Server des Carsharing-Anbieters und zeichnet typischerweise folgendes auf: das anfängliche Polygonnetz des Fahrzeugs 1, eine Historie aller im Laufe der Zeit neu erstellten Polygonnetze und eine Liste aller Schäden und von deren Formen und Orten in den Polygonnetzen. Wird ein Schaden repariert, werden die Listen entsprechend aktualisiert, z. B. indem die entsprechenden Aufzeichnungen entfernt werden oder indem das Referenz-Polygonnetz auf eine frühere Version ohne den reparierten Schaden zurückgesetzt wird.

Der Steuerserver 9 koordiniert das Gesamtsystem.

## Patentansprüche

1. Verfahren zur Schadenkontrolle bei einem Kraftfahrzeug (1), wobei mittels eines mobilen intelligenten Geräts (3), das eine Kamera (4) enthält, Bilder des Kraftfahrzeugs aufgenommen werden, aus denen eine aktuelle dreidimensionale Form des Kraftfahrzeugs gewonnen wird, die dann mit einer gespeicherten Referenzform des Kraftfahrzeugs verglichen wird, um Schäden am Kraftfahrzeug zu erkennen,
**dadurch gekennzeichnet, dass**
das Kraftfahrzeug (1) ein von einem Benutzer (2) zeitweise gemietetes Kraftfahrzeug ist und dass auf dem mobilen Gerät (3) eine Anwendungssoftware (5) installiert ist, welche den Benutzer anleitet, wie er um das Kraftfahrzeug herumzugehen hat und aus bestimmten Positionen mit dem mobilen Gerät Bilder aufzunehmen hat, die das Kraftfahrzeug von allen Seiten zeigen.

2. Verfahren nach Anspruch 1,
**dadurch gekennzeichnet, dass**
das Verfahren bei Carsharing-Fahrzeugen (1) durchgeführt wird.

3. Verfahren nach Anspruch 1 oder 2,
**dadurch gekennzeichnet, dass**
das Verfahren mindestens zu Beginn und am Ende eines Mietzeitraums und/oder zusätzlich mindestens jedes Mal dann durchgeführt wird, wenn der Benutzer (2) zu dem Kraftfahrzeug (1) zurückkehrt, nachdem er es während des Mietzeitraums verlassen hat.

4. Verfahren nach einem der vorhergehenden Ansprüche,
**dadurch gekennzeichnet, dass**
vier, fünf oder mehr einander überlappende Bilder des Kraftfahrzeugs (1) aus unterschiedlichen Positionen aufgenommen werden.

5. Verfahren nach einem der vorhergehenden Ansprüche,
**dadurch gekennzeichnet, dass**
die Anwendungssoftware (5) dem Benutzer (2) auch die Möglichkeit bietet, jederzeit ein oder mehrere Bilder eines von ihm bestimmten Bereichs am Kraftfahrzeug (1) aufzunehmen, und dass die Anwendungssoftware eine daraus gewonnene dreidimensionale Form mit der Referenzform vergleicht, um einen Schaden zu erkennen, von dem der Benutzer annimmt, dass er neu entstanden ist.

6. Verfahren nach einem der vorhergehenden Ansprüche,
**dadurch gekennzeichnet, dass**
die Anwendungssoftware (5) den Benutzer (2) auch anleitet, ein Bild aufzunehmen, welches das Kraftfahrzeugdach zeigt.

7. Verfahren nach einem der vorhergehenden Ansprüche,
**dadurch gekennzeichnet, dass**
die Anwendungssoftware (5) den Benutzer (2) auch anleitet, mindestens ein Bild des Innenraums des Kraftfahrzeugs (1) aufzunehmen.

8. Verfahren nach einem der vorhergehenden Ansprüche,
**dadurch gekennzeichnet, dass**
die Anwendungssoftware (5) dafür eingerichtet ist, eine Schadenprüfprozedur und im Falle der Erkennung eines Schadens eine Schadensmeldeprozedur durchzuführen.

9. Verfahren nach einem der vorhergehenden Ansprüche,
**dadurch gekennzeichnet, dass**
bei jeder Erkennung eines Schadens die aktuelle dreidimensionale Form des Kraftfahrzeugs (1) gespeichert wird, um eine Schadens-Historie aufzustellen, welche ebenfalls gespeichert wird.
